(19) **Europäisches Patentamt / European Patent Office / Office européen des brevets**

(11) **EP 1 918 342 A1**

(12) **EUROPEAN PATENT APPLICATION**
published in accordance with Art. 153(4) EPC

(43) Date of publication:
**07.05.2008 Bulletin 2008/19**

(21) Application number: **06796357.9**

(22) Date of filing: **11.08.2006**

(51) Int Cl.:
*C09J 7/02* (2006.01)    *B32B 27/00* (2006.01)
*B32B 27/30* (2006.01)    *B32B 27/32* (2006.01)
*B60J 11/00* (2006.01)    *C09J 133/06* (2006.01)

(86) International application number:
**PCT/JP2006/315919**

(87) International publication number:
**WO 2007/023695 (01.03.2007 Gazette 2007/09)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.08.2005 JP 2005241428**

(71) Applicant: **NITTO DENKO CORPORATION**
**Ibaraki-shi, Osaka 567-8680 (JP)**

(72) Inventors:
• **SAITOU, Yuki**
**Ibaraki-shi, Osaka 567-8680 (JP)**
• **SHIBATA, Kenichi**
**Ibaraki-shi, Osaka 567-8680 (JP)**
• **IKISHIMA, Shinsuke**
**Ibaraki-shi, Osaka 567-8680 (JP)**

(74) Representative: **Müller-Boré & Partner**
**Patentanwälte**
**Grafinger Strasse 2**
**81671 München (DE)**

(54) **ADHESIVE SHEET FOR GLASS PROTECTION AND PROTECTIVE FILM FOR AUTOMOBILE GLASS**

(57) Disclosed is a pressure sensitive adhesive sheet for glass protection which is excellent in weather resistance, adhesion reliability, transparency and impact resistance. Also disclosed is a protective film for automobile glasses which uses such a pressure sensitive adhesive sheet for glass protection. Specifically disclosed is a pressure sensitive adhesive sheet for glass protection, comprising: a pressure sensitive adhesive layer containing a pressure sensitive adhesive composition containing, as a base polymer, a (meth)acrylic polymer containing, as monomer units, 40 to 99.9% by weight of 2-ethylhexyl (meth)acrylate (A), 0.1 to 10% by weight of a functional-group-containing (meth)acrylic monomer (B), and 0 to 59.9% by weight of a vinyl monomer (C) copolymerizable with the component (A) and/or the component (B); and a support having a three-layer structure of a polyethylene layer/a polypropylene layer/a polyethylene layer.

EP 1 918 342 A1

**Description**

Technical Field

The present invention relates to a pressure sensitive adhesive sheet, more specifically, a pressure sensitive adhesive sheet which is used to protect the surface of an adherend having a glass surface. The invention also relates to a protective film for automobile glass, using the pressure sensitive adhesive sheet.

Background Art

In recent years, surface protective sheets have been used in various fields of woody products, metallic products, glass products, plastic products and others, the mains of which are electrical/electronic materials or precision instruments, in order to prevent damages such as scratches in the storage or distribution process thereof. In the storage or distribution process of automobiles for export also, surface protective films each made of a pressure sensitive adhesive layer formed on a polyolefin resin film, and others have been used in order to protect automobile bodies (metallic regions, plastic regions and so on) against scratches.

However, for articles which are stored or left outdoors at high temperature for a long term, such as automobiles as described above, the roof temperature of which reaches even 80˚C or higher when they are left outdoors in summer or the like, there remains a problem that it becomes difficult to peel the protective films bonded to their glass surfaces by a deterioration in the strength, the flexibility or the like on the basis of ultraviolet rays, heat or the like; a rise in the adhesive strength with time and other factors.

In order for protective films to be used for the protection of automobile glass surfaces, it is necessary to move individual automobiles at any time in the state that the protective films adhere thereto in the storage or distribution process thereof. Thus, the protective films are required to have transparency which does not hinder the driving thereof.

In particular, about automobiles for export or others, in many cases, the automobiles are temporarily stored outdoors for a period from a few months to about half a year until finished vehicles thereof are passed to users. It has been turned out that in the case that severe weathers, such as strong winds or a typhoon, are caused in the storage or in a transportation thereof, there arise problems that damages such as scratches or cracks are generated in the glass surfaces by action of pebbles, sand or the like. In general, when a painted region of an automobile is damaged, the region can be partially repaired by refinishing or the like. However, when scratches or cracks are generated in glass regions of automobiles, the glasses are required to be wholly replaced even if the scratches or cracks are partially generated. Accordingly, serious problems are caused from the viewpoint of works and costs. For this reason, in recent years, protective members have been demanded for protecting glass surfaces of automobiles or the like when they are shipped or stored.

As attempts for overcoming the above-mentioned problems, materials for protecting glass surfaces are suggested. Disclosed is, for example, a surface protective film wherein a pressure sensitive adhesive agent containing a polyethylene/vinyl acetate copolymer is used to a support made of polypropylene (see, for example, Patent Document 1). However, according to this suggestion, an adhesive residue is unfavorably generated after the film is peeled even if the adherend is stored at a temperature of about 80˚C, which corresponds to an actual use environment. Thus, the weather resistance and the impact resistance are insufficient. It has been made clear that it is inadequate to apply the protective film in particular to automobile glasses, which are stored or protected outdoors in many cases.

In the meantime, a glass protective apparatus which partially covers the window glass of an automobile is disclosed as a manner different from surface protective sheets (see, for example, Patent Document 2). However, this suggestion is poor in economical efficiency, workability and transparency. Thus, it is inadequate to apply the suggestion to automobile glasses, concerning which individual automobiles are required to be moved at any time in the storage or distribution process thereof.

Patent Document 1: JP-A-2001-150608
Patent Document 2: JP-A-2004-106820

DISCLOSURE OF THE INVENTION

Problems to be solved by the invention

In light of such situations, an object of the present invention is to provide a pressure sensitive adhesive sheet for glass protection which is excellent in weather resistance, adhesion reliability, transparency and impact resistance, and a protective film for automobile glass, using the pressure sensitive adhesive sheet for glass protection.

Means for solving the problems

The inventors have repeatedly made eager researches to attain the object, so as to find out that the above-mentioned object can be attained by a pressure sensitive adhesive sheet described below. Thus, the invention has been completed.

Accordingly, the invention is a pressure sensitive adhesive sheet for glass protection, having: a pressure sensitive adhesive layer containing a pressure sensitive adhesive composition containing, as a base polymer, a (meth) acrylic polymer containing, as monomer units, 40 to 99.9% by weight of 2-ethylhexyl (meth)acrylate (A), 0.1 to 10% by weight of a functional-group-containing (meth)acrylic monomer (B), and 0 to 59.9% by weight of a vinyl monomer (C) copolymerizable with the component (A) and/or the component (B); and a support having a three-layer structure of a polyethylene layer/a polypropylene layer/a polyethylene layer.

According to the invention, the pressure sensitive adhesive sheet, wherein a pressure sensitive adhesive layer containing a pressure sensitive adhesive composition using, as a base polymer, a (meth)acrylic polymer containing the above-mentioned specified monomer units is formed on a support having a three-layer structure of a polyethylene layer/ a polypropylene layer/a polyethylene layer, is excellent in weather resistance, adhesion reliability, transparency, and impact resistance, as will be demonstrated by results of Examples.

Details of the reason why the pressure sensitive adhesive layer expresses such characteristics are unclear, but it can be guessed that a combination of the above-mentioned pressure sensitive adhesive layer, which uses the (meth)acrylic polymer containing the specified monomer units, with the above-mentioned support of the specified structure makes it possible to give weather resistance, adhesion reliability, transparency, and impact resistance with a good balance.

In the invention, the following are used as monomer units: 40 to 99.9% by weight of 2-ethylhexyl (meth)acrylate (A), 0.1 to 10% by weight of a functional-group-containing (meth)acrylic monomer (B), and 0 to 59.9% by weight of a vinyl monomer (C) copolymerizable with the component (A) and/or the component (B). The use of this (meth)acrylic polymer as the base polymer of the pressure sensitive adhesive composition gives a pressure sensitive adhesive sheet excellent in weather resistance and reliability of adhesion to glass.

The (meth)acrylic polymer in the invention means acrylic polymer and/or methacrylic polymer. The (meth) acrylate means acrylate and/or methacrylate, and an alkyl ester of (meth)acrylic acid means an alkyl ester of acrylic acid and/or an alkyl ester of methacrylic acid.

In the pressure sensitive adhesive sheet of the invention, it is preferred that the pressure sensitive adhesive composition further comprises 0.1 to 5.0 parts by weight of a weather resistance stabilizer for 100 parts by weight of the (meth)acrylic polymer. By containing the predetermined amount of this weather resistance stabilizer, the sheet becomes a sheet excellent in weather resistance more surely.

In the invention, the weather resistance stabilizer means an ultraviolet absorbent, a light stabilizer, or antioxidant. These compounds may be used alone or in the form of a mixture of two or more thereof as the weather resistance stabilizer.

In the pressure sensitive adhesive sheet of the invention, it is also preferred that the functional-group-containing (meth)acrylic monomer (B) is a hydroxyl-group-containing (meth)acrylate.

In the invention, it is also preferred that a gel fraction ratio of the pressure sensitive adhesive layer is from 70 to 98% by weight.

In the pressure sensitive adhesive sheet of the invention, it is preferred that the polypropylene layer of the support contains 50 to 90% by weight of a homopolymer of polypropylene, or a random copolymer of polypropylene (random polypropylene) wherein 96 to 99.9% by mole of polypropylene is random-copolymerized with 0.1 to 4% by mole of monomer, such as ethylene, or butene. The use of this support gives weather resistance, adhesion reliability, transparency, and impact resistance with a better balance.

It is also preferred that the polypropylene layer of the support has a thickness of 30 to 100 $\mu$m.

Furthermore, in the pressure sensitive adhesive sheet of the invention, a scratch area ratio in an impact resistance test is preferably 0.20% or less, more preferably 0.16% or less, even more preferably 0.12% or less. The pressure sensitive adhesive sheet having the above-mentioned value becomes particularly suitable as a sheet for glass protection which may be stored in the outdoors or the like for a long term or may undergo a distribution process.

In the impact resistance test (the evaluation of the impact resistance) in the invention, each sample wherein a produced pressure sensitive adhesive sheet is caused to adhere to a piece of glass having a test piece size is used to make a test by use of a pebble-throwing testing machine (JA-400, manufactured by Suga Test Instruments Co., Ltd.) under test conditions described later, and the scratch area ratio (%) per given area of each of the adherends after the test is calculated into a numerical value according to the following formula:

$$\text{Scratch area ratio (\%)} = [(\text{the total area of the scratch portions})/(\text{the area of the whole})] \times 100.$$

In the meantime, the protective film of the invention for automobile glass is characterized in that one or more species of any of the above-mentioned pressure sensitive adhesive sheet are used. According to the protective film of the invention for automobile glass, the film has a function which is suitable for the surface protection of automobile glass and is excellent in weather resistance, adhesion reliability, transparency and impact resistance since the pressure sensitive adhesive sheet having effects and advantageous as described above is used.

BEST MODE FOR CARRYING OUT THE INVENTION

Embodiments of the invention will be described in detail hereinafter.

In short, the pressure sensitive adhesive sheet of the invention is a pressure sensitive adhesive sheet for glass protection having: a pressure sensitive adhesive layer containing a pressure sensitive adhesive composition containing, as a base polymer, a (meth)acrylic polymer containing, as monomer units, 40 to 99.9% by weight of 2-ethylhexyl (meth) acrylate (A), 0.1 to 10% by weight of a functional-group-containing (meth)acrylic monomer (B), and 0 to 59.9% by weight of a vinyl monomer (C) copolymerizable with the component (A) and/or the component (B); and a support having a three-layer structure of a polyethylene layer/a polypropylene layer/a polyethylene layer.

As the (meth)acrylic polymer used in the invention, there is used a polymer containing, as monomer units, 40 to 99.9% by weight of 2-ethylhexyl (meth)acrylate (A), 0.1 to 10% by weight of a functional-group-containing (meth) acrylic monomer (B), and 0 to 59.9% by weight of a vinyl monomer (C) copolymerizable with the component (A) and/or the component (B).

As the component (A) in the invention, 40 to 99.9% by weight of 2-ethylhexyl (meth)acrylate is used. The amount thereof is more preferably from 50 to 99% by weight, more preferably from 60 to 98% by weight. If the amount is less than 40% by weight, the adhesive strength to glass surfaces may decline.

As the component (B) in the invention, a functional-group-containing (meth)acrylic monomer is used. This functional-group-containing (meth)acrylic monomer is used mainly to improve the adherability onto the substrate, and further improve an initial adherability onto an adherend.

The functional-group-containing (meth)acrylic monomer in the invention means an acrylic monomer having, in a molecule thereof, one or more functional groups, such as a carboxyl group, an acid anhydride group, and a hydroxyl group. Examples thereof include a carboxyl-group-containing monomer, an acid-anhydride-group-containing monomer, and a hydroxyl-group-containing monomer. In particular, a hydroxyl-group-containing monomer is preferably used.

Examples of the carboxyl-group-containing monomer include acrylic acid, methacrylic acid, carboxyethyl (meth) acrylate, carboxypentyl (meth)acrylate, itaconic acid, maleic acid, fumaric acid, and crotonic acid. In particular, acrylic acid and methacrylic acid are preferably used.

Examples of the acid-anhydride-group-containing monomer include maleic anhydride and itaconic anhydride.

Examples of the hydroxyl-group-containing monomer include 2-hydroxyethyl (meth)acrylate, 2-hydroxypropyl (meth)acrylate, 4-hydroxybutyl(meth)acrylate, 2-hydroxyhexyl (meth)acrylate, 6-hydroxyhexyl (meth)acrylate, 8-hydroxyoctyl (meth)acrylate,10-hydroxydecyl (meth)acrylate, 12-hydroxylauryl (meth)acrylate, (4-hydroxymethylcyclohexyl) methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether.

About the above-mentioned functional-group-containing (meth)acrylic monomer in the invention, a single species thereof may be used or a mixture of two or more species thereof may be used. The content of the whole thereof is from 0.01 to 10% by weight of the whole of the monomers for the (meth)acrylic polymer, preferably from 0.01 to 7% by weight thereof, more preferably from 0.01 to 5% by weight thereof. If the content is less than 0.01% by weight, the adherability to the substrate may decline. On the other hand, if the content is more than 10% by weight, the adhesive strength may rise with time.

As the component (C) in the invention, a vinyl-based monomer copolymerizable with the component (A) and/or the component (B) is used. If necessary, the vinyl-based monomer copolymerizable with the component (A) and/or the component (B) is used in order to adjust the initial adhesive strength or the adhesive strength depending on time, adjust the cohesive strength, and attain other purposes.

As the copolymerizable vinyl-based monomer, for example, the following can be appropriately used: a cohesive strength/heat resistance improving component such as a sulfonic-acid-group-containing monomer, a phosphoric-acid-group-containing monomer, a cyano-group-containing monomer, a vinyl ester monomer, or an aromatic vinyl-based monomer; a component having a functional group acting to improve the adhesive strength or acting as a crosslinking base point, such as an amide-group-containing monomer, an amino-group-containing monomer, an imide-group-containing monomer, an epoxy-group-containing monomer, or a vinyl ether monomer; and a different (meth)acryl-based monomer having an alkyl group (alkyl (meth)acrylate). These monomer compounds may be used alone or may be used in the form of a mixture of two or more thereof.

Examples of the sulfonic-acid-group-containing monomer include styrenesulfonic acid, allylsulfonic acid, 2-(meth)acrylamide-2-methylpropanesulfonic acid, (meth)acrylamidepropanesulfonic acid, sulfopropyl (meth)acrylate, and (meth)acryloyloxynaphthalenesulfonic acid.

Examples of the phosphoric-acid-group-containing monomer include 2-hydroxyethylacryloyl phosphate.

Examples of the cyano-group-containing monomer include acrylonitrile, and methacrylonitrile.

Examples of the vinyl ester monomer include vinyl acetate, vinyl propionate, vinyl laurate, and vinyl pyrrolidone.

Examples of the aromatic vinyl-based monomer include styrene, chlorostyrene, chloromethylstyrene, a-methylstyrene, and benzyl (meth)acrylate.

Examples of the amide-group-containing monomer include acrylamide, methacrylamide, diethyl(meth)acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, and N,N-dimethylaminopropylmethacrylamide.

Examples of the amino-group-containing monomer include N,N-dimethylaminoethyl (meth)acrylate, N,N-dimethylaminopropyl (meth)acrylate, N-(meth)acryloylmorpholine, and aminoalkyl (meth)acrylates.

Examples of the imide-group-containing monomer include cyclohexylmaleimide, isopropylmaleimide, N-cyclohexylmaleimide, and itaconic imide.

Examples of the epoxy-group-containing monomer include glycidyl (meth)acrylate, and allyl glycidyl ether.

Examples of the vinyl ether monomer include methyl vinyl ether, ethyl vinyl ether, and isobutyl vinyl ether.

The alkyl (meth)acrylate is not particularly limited as long as this ester is a (meth)acrylate-based monomer having an alkyl group having 2 to 14 carbon atoms. The ester preferably has 3 to 13 carbon atoms, and more preferably has 4 to 12 carbon atoms. The alkyl group which can be used and has 5 or more carbon atoms may have a linear chain or a branched chain. An alkyl group having a branched chain is preferred since the glass transition point thereof is low.

More specifically, examples of the alkyl(meth)acrylate include ethyl (meth)acrylate, propyl (meth)acrylate, n-butyl (meth)acrylate, isobutyl (meth)acrylate, sec-butyl (meth)acrylate, t-butyl (meth)acrylate, hexyl (meth)acrylate, cyclohexyl (meth)acrylate, t-butylcyclohexyl (meth)acrylate, isoamyl (meth)acrylate, n-pentyl (meth)acrylate, isopentyl (meth)acrylate, cyclopentyl (meth)acrylate, n-octyl (meth)acrylate, isooctyl (meth)acrylate, cyclooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, and n-tetradecyl (meth)acrylate. In particular, ethyl (meth)acrylate, n-butyl (meth)acrylate, isobutyl (meth)acrylate, sec-butyl (meth)acrylate, or t-butyl (meth)acrylate is preferably used.

Other examples of the (meth)acrylic monomer having an alkyl group include silane monomers each having a silicon atom.

About the copolymerizable vinyl monomer in the invention, a single species thereof may be used or a mixture of two or more species thereof may be used. The content of the whole thereof is from 0 to 59.9% by weight of the whole of the monomers for the (meth)acrylic polymer, preferably from 0 to 49.9% by weight thereof, more preferably from 0 to 39.9% by weight thereof. If the content is more than 60% by weight, the initial adhesive strength may decline.

It is desired that the weight-average molecular weight of the (meth)acryl-based polymer used in the invention is 100000 or more, preferably 250000 or more, more preferably 400000 or more. If the weight-average molecular weight is less than 100000, the endurance is poor and the cohesive strength of the pressure sensitive adhesive composition is small so that an adhesive residue tends to be generated. On the other hand, the weight-average molecular weight is preferably less than 1000000 from the viewpoint of workability. The weight-average molecular weight is a molecular weight obtained by measurement by GPC (gel permeation chromatography).

It is desired that the glass transition temperature (Tg) of the (meth)acryl-based polymer is 0˚C or lower (usually, -100˚C or higher), preferably -10˚C or lower since the pressure sensitive adhesive performances are easily balanced. If the glass transition temperature is higher than 0˚C, the polymer does not flow with ease so that the wettability to an adherend is insufficient. As a result, blisters tend to be caused between the adherend and the pressure sensitive adhesive composition layer of the pressure sensitive adhesive sheet. The glass transition temperature (Tg) of the (meth)acryl-based polymer can be adjusted into the above-mentioned range by varying the used monomer components or the composition ratio appropriately. As the glass transition temperature (Tg) (˚C), an ordinary value may be adopted. There may be used, for example, numerical values described in Polymer Handbook Fourth Edition (edited by J. Brandup et al., 1999 John Wiley & Sons, Inc.) Chap. VI, pp. 198-253, and other values. In the case of a novel polymer, it is advisable to adopt, as the glass transition temperature (Tg), the temperature of the peak of the loss tangent (tan $\delta$) in a viscoelasticity measuring method (shear manner; measuring frequency: 1 Hz).

For the production of the (meth)acryl-based polymer, a known radical polymerization method can be appropriately selected, examples thereof including solution polymerization, bulk polymerization, and emulsion polymerization. The resultant (meth)acryl-based polymer may be any one selected from a random copolymer, block copolymer, a graft copolymer, and others.

As a polymerization solvent in the solution polymerization, for example, the following can be used: methyl ethyl ketone, acetone, ethyl acetate, tetrahydrofuran, dioxane, cyclohexanone, n-hexane, toluene, xylene, mesitylene, methanol, ethanol, n-propanol, isopropanol, water, and various aqueous solutions. The reaction is conducted usually at about 60 to 80˚C for about 4 to 10 hours in a current of an inert gas such as nitrogen.

The polymerization initiator, the chain transfer agent, and others that are used in the radical polymerization are not particularly limited, and can be appropriately selected for use.

Examples of the polymerization initiator used in the invention include azo initiators such as 2,2'-azobisisobutyronitrile 2,2'-azobis(2-amidinopropane)dihydrochloride, 2,2'-azobis[2-(5-methyl-2-imidazoline-2-yl)propane]dihydrochloride, 2,2'-azobis(2-methylpropionamidine) disulfate, 2,2'-azobis(N,N'-dimethyleneisobutylamidine), and 2,2'-azobis[N-(2-carboxyethyl)-2-methylpropionamidinel] hydrate (VA-057, manufactured by Wako Pure Chemical Industries, Ltd.); persulfates such as potassium persulfate, and ammonium persulfate; peroxide initiators such as di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, t-butyl peroxyisobutyrate, 1,1-di(t-hexylperoxy)cyclohexane, t-butyl hydroperoxide, and hydrogen peroxide; redox initiators, wherein a peroxide is combined with a reducing agent, such as a combination of a persulfate with sodium hydrogen sulfite, and a combination of a peroxide with sodium ascorbate. However, the polymerization initiator is not limited thereto.

The polymerization initiators may be used alone or be used in the form of a mixture of two or more thereof. The content of the whole thereof is preferably from about 0.005 to 1 part by weight, more preferably from about 0.02 to 0.5 part by weight with respect to 100 parts by weight of the monomers.

In the invention, a chain transfer agent may be used in the polymerization. The use of the chain transfer agent makes it possible to adjust the molecular weight of the acryl-based polymer appropriately.

Examples of the chain transfer agent include laurylmercaptane, glycidylmercaptane, mercaptoacetic acid, 2-mercaptoethanol, thioglycolic acid, 2-ethylhexyl thioglycolate, and 2,3-dimercapto-1-propanol.

These chain transfer agents may be used alone or be used in the form of a mixture of two or more thereof. The content of the whole thereof is from about 0.01 to 0.1 part by weight with respect to 100 parts by weight of the monomers.

The (meth)acrylic polymer in the invention is a polymer having a structure described above. The pressure sensitive adhesive composition in the invention is a composition containing, as a base polymer, the above-mentioned (meth)acrylic polymer.

The pressure sensitive adhesive composition of the invention becomes better in weather resistance, heat resistance and others by crosslinking the (meth)acryl-based polymer with a crosslinking agent. The crosslinking agent used in the invention may be a compound having in the molecule thereof two or more functional groups capable of reacting with (bonding to) the functional group of the above-mentioned functional-group-containing vinyl-based monomer. For example, the following can be used: a polyisocyanate compound, an epoxy compound, an oxazoline compound, a melamine resin, an aziridine derivative, and a metal chelate compound. These compounds may be used alone, or may be used in combination.

Examples of the polyisocyanate compound, out of these, include aromatic isocyanates such as tolylenediisocyanate and xylenediisocyanate, alicyclic isocyanates such as isophoronediisocyanate, aliphatic isocyanates such as hexamethylenediisocyanate, and emulsion type isocyanate.

More specifically, examples of the polyisocyanate include lower aliphatic polyisocyanates such as butylenediisocyanate and hexamethylenediisocyanate, alicyclic isocyanates such as cyclopentylenediisocyanate, cyclohexylenediisocyanate and isophoronediisocyanate, aromatic diisocyanates such as 2,4-tolylenediisocyanate, 4,4'-diphenylmethanediisocyanate and xylylenediisocyanate, a trimethylolpropane/tolylenediisocyanate trimer adduct (trade name: Coronate L, manufactured by Nippon Polyurethane Industry Co., Ltd.), a trimethylolpropane/hexamethylenediisocyanate trimer adduct (trade name: Coronate HL, manufactured by Nippon Polyurethane Industry Co., Ltd.), an isocyanurate product of hexamethylenediisocyanate (trade name: Coronate HX, manufactured by Nippon Polyurethane Industry Co., Ltd.), and a self-emulsification type polyisocyanate (trade name: AQUANATE 200, manufactured by Nippon Polyurethane Industry Co., Ltd.). These polyisocyanate compounds may be used alone or in the form of a mixture of two or more thereof.

Examples of the oxazoline compound include 2-oxazoline, 3-oxazoline, 4-oxazoline, 5-keto-3-oxazoline, and EPOCROS (manufactured by Nippon Shokubai Co., Ltd.). These compounds may be used or may be used in combination.

Examples of the epoxy compound include polyglycidylamine such as N,N,N',N'-tetraglycidyl-m-xylenediamine (trade name: TETRAD-X, manufactured by Mitsubishi Gas Chemical Co., Inc.), 1,3-bis(N,N-diglycidylaminomethyl) cyclohexane (trade name: TETRAD-C, manufactured by Mitsubishi Gas Chemical Co., Inc.), tetraglycidyldiaminodiphenylmethane, triglycidyl-p-aminophenol, diglycidylaniline, and diglycidyl-o-toluidine. These compounds may be used or may be used in combination.

Examples of the melamine resin include hexamethylolmelamine, and water-soluble melamine resins.

Examples of the aziridine derivative include a commercially available product trade-named HDU (manufactured by Sogo Pharmaceutical Co., Ltd.), that trade-named TAZM (manufactured by Sogo Pharmaceutical Co., Ltd.), and that trade-named TAZO (manufactured by Sogo Pharmaceutical Co., Ltd.). These compounds may be used or may be used in combination.

About the metal chelate compound, examples of its metal component include aluminum, iron, tin, titanium, and nickel, and examples of its chelate component include acetylene, methyl acetoacetate, and ethyl lactate. These compounds may be used or may be used in combination.

The used amount of the crosslinking agent(s) is appropriately selected in accordance with the balance with the (meth)acryl-based polymer to be crosslinked and the usage thereof as a pressure sensitive adhesive sheet. In order to gain sufficient weather resistance and heat resistance by the cohesive strength of the (meth)acryl-based polymer, in general the agent is contained preferably in an amount of 1 to 10 parts by weight, more preferably in an amount of 2 to 8 parts by weight with respect to 100 parts by weight of the (meth)acryl-based polymer. If the content is less than 1 part by weight, the crosslink formation based on the crosslinking agent(s)is insufficient so that the ratio of contents insoluble in the solvent tends to fall. Moreover, the cohesive strength of the pressure sensitive adhesive composition is small so that an adhesive residue tend to be caused. On the other hand, if the content is more than 10 parts by weight, the initial adhesive strength of the pressure sensitive adhesive layer is insufficient and further the cohesive strength of the polymer is large so that the fluidity lowers and the wettability onto an adherend is insufficient. As a result, the sheet may be peeled off.

In the pressure sensitive adhesive sheet of the invention, a weather-resistant stabilizer may be used in an amount of 0.1 to 5.0 parts by weight with respect to 100 parts by weight of the (meth)acryl-based polymer. The use causes the composition to exhibit excellent weather resistance, and re-peeling property. The weather-resistant stabilizer is used preferably in an amount of 0.1 to 3.0 parts by weight, more preferably in an amount of 0.1 to 2.0 parts by weight.

The weather-resistant stabilizer in the invention is an ultraviolet absorbent, a light stabilizer, or an antioxidant. These compounds may used, as the weather-resistant stabilizer, alone or in the form of a mixture of two or more thereof.

As the ultraviolet absorbent, a known ultraviolet absorbent may be appropriately used, examples of the absorbent including benzotriazole based ultraviolet absorbents, triazine based ultraviolet absorbents, and benzophenone based ultraviolet absorbents. These ultraviolet absorbents may be used alone or may be used in the form of a mixture of two or more thereof.

As the light stabilizer, a known light stabilizer may be appropriately used, examples of the light stabilizer including hindered amine light stabilizers, and benzoate based light stabilizers. These light stabilizers may be used alone or may be used in the form of a mixture of two or more thereof.

As the antioxidant, a known antioxidant may be appropriately used, examples of the antioxidant including hindered phenol antioxidants, phosphorus-containing process-heat stabilizers, lactone process-heat stabilizers, and sulfur-containing heat-resistant stabilizers. These antioxidants may be used alone or may be used in the form of a mixture of two or more thereof.

Furthermore, the pressure sensitive adhesive composition of the invention may contain other known additives such as a colorant, powders such as pigment, a dye, a surfactant, a plasticizer, a tackifier, a surface lubricant, a leveling agent,a surfactant, a softener, an antistatic agent,an inorganic or organic filler, a metal powder, and a granular or foil-form product in accordance with the usage. The blend amounts of these optional components may be use amounts that are ordinarily utilized in the field of surface protecting materials.

In the meantime, the adhesive layer in the invention is a layer made of a pressure sensitive adhesive composition containing, as a base polymer, a (meth)acrylic polymer as described above. Moreover, the pressure sensitive adhesive layer in the invention may be formed from a material obtained by crosslinking the pressure sensitive adhesive composition. At this time, the crosslinking of the pressure sensitive adhesive composition is generally performed after application of the pressure sensitive adhesive composition; a pressure sensitive adhesive layer made of the crosslinked pressure sensitive adhesive composition may be transferred onto the support or the like.

The method for forming the pressure sensitive adhesive layer onto a support is not particularly limited. The layer is formed by, for example, a method of painting the pressure sensitive adhesive composition onto a separator subjected to removing treatment, or the like, and then removing the polymerization solvent or the like by drying, thereby forming a pressure sensitive adhesive layer onto the support, a method of painting the pressure sensitive adhesive composition onto a support, and removing the polymerization solvent or the like by drying, thereby forming a pressure sensitive adhesive layer onto the support, or some other method. Thereafter, ageing treatment may be conducted in order to adjust the shift of the components of the pressure sensitive adhesive layer, adjust crosslinking reaction, or attain other purposes. When the pressure sensitive adhesive composition is applied onto a support to form a pressure sensitive adhesive sheet, one or more solvents other than the polymerization solvent may newly be added to the composition in order that the composition can be uniformly applied onto the support.

Examples of the solvent used in the invention include methyl ethyl ketone, acetone, ethyl acetate, tetrahydrofuran, dioxane, cyclohexanone, n-hexane, toluene, xylene, mesitylene, methanol, ethanol, n-propanol, isopropanol, water, and various aqueous solutions. These solvents may be used alone or may be used in the form of a mixture of two or more thereof.

As the method for forming the pressure sensitive adhesive layer of the invention, there is used a known method used to produce a pressure sensitive adhesive sheet. Specific examples thereof include roll coating, kiss roll coating, gravure coating, reverse coating, roll blush, spray coating, dip roll coating, bar coating, knife coating, air knife coating, and extrusion coating using a die coater.

The surface of the pressure sensitive adhesive layer may be subjected to surface treatment such as corona treatment, plasma treatment, or ultraviolet treatment.

In the invention, the added amount of an isocyanate based crosslinking agent is adjusted so as to set the gel fraction ratio of the crosslinked pressure sensitive adhesive layer preferably in the range of 70 to 98% by weight, more preferably into that of 80 to 97% by weight, even more preferably into that of 85 to 97% by weight. If the gel fraction ratio is less than 70% by weight, the cohesive strength falls so that the durability or the curved face adherability may be poor. If the ratio is more than 98% by weight, the adherability may be poor.

About the gel fraction ratio of the pressure sensitive adhesive composition in the invention, a dry weight $W_1$ (g) of the pressure sensitive adhesive layer is immersed into ethyl acetate, and then insoluble matters of the pressure sensitive adhesive layer is taken out from ethyl acetate. After the matters are dried, a weight $W_2$ (g) is measured, and a value calculated out according to "$(W_2/W_1) \times 100$" is defined as the gel fraction ratio (% by weight).

More specifically, the $W_1$ (g) (about 100 mg) of the crosslinked pressure sensitive adhesive layer is collected in, for example, a tetrafluoroethylene resin film (manufactured by Nitto Denko Corporation; NITOFLON, NTF1122; pore diameter: 0.2 $\mu$m). Next, the sample is immersed in ethyl acetate at 23°C for 7 days, and then the sample is take out. The sample is dried at 130°C for 2 hours, and the $W_2$ (g) of the resultant pressure sensitive adhesive layer is measured. The $W_1$ and the $W_2$ are put into the above-mentioned formula, thereby calculating the gel fraction ratio (% by weight).

In order to adjust the gel fraction ratio into a predetermined ratio, it is necessary to adjust the added amount of the isocyanate based crosslinking agent and further make a sufficient consideration on the effect of crosslinking treatment conditions (such as the heating treatment temperature and the heating time).

The crosslinking treatment may be carried out at the temperature in the step of drying the pressure sensitive adhesive layer. Alternatively, after the drying step, a crosslinking treatment step may be separately set to conduct the treatment.

In the invention, the pressure sensitive adhesive layer is formed to have a thickness of about 5 to 50 $\mu$m, preferably about 10 to 30 $\mu$m after the layer is dried.

In the case that the pressure sensitive adhesive makes its appearance onto such a surface, the pressure sensitive adhesive layer may be protected with a sheet subjected to removing treatment (a removable sheet, a separator or a removable liner) until the layer is put to practical use.

Examples of the constituting material of the separator (the removable sheet or the removable liner) include plastic films such as polyethylene, polypropylene, polyethylene terephthalate, and polyester films, porous materials such as paper, cloth and nonwoven cloth, and appropriate sheet-form products such as a net, a foamed sheet, a metal foil and laminates thereof. The plastic films are preferably used since they are excellent in surface smoothness.

The film is not particularly limited as long as the film is a film capable of protecting the pressure sensitive adhesive layer. Examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

The thickness of the separator is usually from about 5 to 200 $\mu$m, preferably from about 5 to 100 $\mu$m.

If necessary, the separator may be subjected to releasing and antifouling treatment with a silicone, fluorine-containing, long-chain alkyl, or aliphatic acid amide releasing agent, or silica powder, or antistatic treatment of a paint type, a kneading type, a vapor-deposition type or some other type. When the surface of the separator is appropriately subjected to removing treatment such as silicone treatment, long-chain alkyl treatment or fluorine treatment, the peeling property from the pressure sensitive adhesive layer can be made higher.

In the above-mentioned production process, the sheet subjected to the removing treatment (the removable sheet, the separator or the removable liner) can be used, as it is, as a separator for a pressure sensitive adhesive sheet. Thus, the process can be made simple.

The pressure sensitive adhesive layer of the invention is a layer having a structure as described above.

The pressure sensitive adhesive sheet of the invention is a pressure sensitive adhesive sheet wherein a single face of a support has or both faces of the support each have a pressure sensitive pressure sensitive adhesive layer which is formed thereon and has the above-mentioned structure.

The sheet in the invention means a planar material, and include, in the category thereof, products which are ordinarily called tapes and films.

As the support in the invention, a resin layer having a three-layer structure of a polyethylene layer/ a polypropylene layer/ a polyethylene layer is used.

For the support, a multi-layered structure resin layer may be used which contains at least a three-layer structure of a polyethylene layer/a polypropylene layer/a polyethylene layer. The support may contain one or more different layers between the individual layers, or on the surface of each of the layers as long as the advantageous effects of the invention are not damaged.

Polypropylene is a material excellent in transparency and heat resistance, and has a measure of impact resistance. However, it is difficult that a sufficient adherability thereof onto the pressure sensitive adhesive layer is obtained. As described above, therefore, in the invention, a polyethylene layer is formed on the pressure sensitive adhesive layer side and further a polyethylene layer is likewise formed as an outer layer on the front surface side in order to restrain phenomena such as curling. It has been found out that this manner gives a pressure sensitive adhesive sheet exhibiting impact resistance, weather resistance and adherability with a good balance.

Considering, in particular, the use thereof in the outdoors, the polyethylene layer, which is a polyethylene based resin layer, is used as the outermost layer from the viewpoint of weather resistance and impact resistance. The polyethylene based resin may be, for example, a resin layer made of an ethylene polymer (such as low density, high density or linear low density polymer), an olefin polymer such as ethylene/α olefin copolymer, or an olefin polymer made from ethylene, such as ethylene/vinyl acetate copolymer, ethylene/methyl methacrylate copolymer, ethylene/propylene copolymer or ethylene/propylene/a olefin copolymer, and one or more different monomers. When such a polyethylene layer is used, the support is preferred from the viewpoint of weather resistance, impact resistance, transparency and adherability onto the outermost layer and the different layer.

The content of the unit of polyethylene in the polyethylene layer is preferably 60% or more by weight, more preferably 70% or more by weight, even more preferably 80% or more by weight. If the content of the polyethylene unit is less than 50% by weight, the anchoring force to the pressure sensitive adhesive layer lowers. Thus, when the sheet adheres strongly or the adhesive strength thereof increases with time, an adhesive residue is liable to be generated. The outmost layer may be a layer made of a drawn resin or a non-drawn resin. About the polyethylene resin layer, a single species thereof may be used or a laminate made of two or more species thereof may be used.

The thickness of each of the above-mentioned polyethylene layers is from 3 to 30 $\mu$m. In particular, a thickness of 5 to 20 $\mu$m is general. However, the thickness is not limited thereto.

As the polypropylene layer, a polypropylene based resin layer is used. The polypropylene based resin layer may be, for example, a layer made of: a propylene based polymer (homopolymer; random copolymerized polymer wherein ethylene or a comonomer other than propylene is inserted at random into the molecular chain (hereinafter referred to as random polypropylene); or block copolymerized polymer wherein ethylene is copolymerized, in the form of blocks, into the molecular chain (hereinafter referred to as block polypropylene). Commercially available block polypropylene is not limited to any pure block copolymer, many examples of the polypropylene including polymers wherein ethylene and ethylene/propylene rubber, which are byproducts other than block copolymer, are present as a mixture in the matrix of homopolymer; the block polypropylene also includes, in the category thereof, these examples); an impact copolymer known as thermoplastic elastomer (TPE), thermoplastic polyolefin resin (TPO) or the like (the impact copolymer ordinarily means a polymer wherein the matrix of homopolymer contains therein about 50% or less of ethylene/propylene rubber, and is TPO or TPE having a larger rubber content than block polypropylene); an olefin polymer made from propylene, such as ethylene/propylene copolymer, propylene/α olefin copolymer, or ethylene/propylene/α olefin copolymer, and a different monomer; or the like. When such a polypropylene layer is used, the support is preferred from the viewpoint of weather resistance, impact resistance, transparency and adherability onto the outermost layer and the different layer.

The content of the unit of polypropylene in the polypropylene layer is preferably 60% or more by weight, more preferably 70% or more by weight, even more preferably 80% or more by weight. If the content of the polypropylene unit is less than 50% by weight, the layer is poor in heat resistance and the layer is easily peeled off when the sheet is used outdoors. The polypropylene layer may be a drawn layer or a non-drawn layer. About the polypropylene resin layer, a single species thereof may be used or a laminate made of two or more species thereof may be used.

The thickness of the polypropylene layer is from 30 to 150 $\mu$m. In particular, a thickness of 30 to 100 $\mu$m is general. However, the thickness is not limited thereto.

In order to improve the adherability between the polyethylene layers and the polypropylene layer, there can be used a method of incorporating a modifier into the polypropylene layer, a method of using, as the polypropylene layer, a polypropylene based resin layer containing a polyethylene unit, or some other method.

The resin used in the polypropylene layer to improve the above-mentioned adherability may be, for example, amorphous soft polypropylene based material, or block copolymer of polypropylene (block polypropylene). A more specific example thereof is TAFTHREN (manufactured by Sumitomo Chemical Co., Ltd.).

The polypropylene layer is in particular preferably a layer containing 0 to 50% by weight of amorphous soft polypropylene based material. More preferably, the material is contained in an amount of 5 to 40% by weight. If the content of the amorphous soft polypropylene based material is 50% or more by weight, the layer may be poor in heat resistance.

The content of the unit of polyethylene in the polypropylene layer is preferably from 0 to 20% by weight. If the content of the polyethylene unit is 20% or more by weight, the polypropylene unit and the polyethylene unit easily undergo phase separation so that transparency may not be obtained.

The thickness of the resin layer containing the three-layer structure (the support) is from 40 to 170 $\mu$m. In particular, a thickness of 50 to 120 $\mu$m is general. However, the thickness is not limited thereto.

The surface of the support (or each of the resin layers) may be subjected to a surface treatment (such as corona treatment, plasma treatment, or ultraviolet ray treatment) in order to improve the adherability onto different one of the resin layers, the pressure sensitive adhesive layer, an undercoat layer or the like. The support (the resin layer) may be subjected to a rear surface treatment.

From the viewpoint of weather resistance, the support (each of the resin layers) may be appropriately subjected to a treatment with a weather resistance stabilizer as long as the transparency and others in the invention are not damaged.

The treatment of a weather-resistant stabilizer (an ultraviolet absorbent, a light stabilizer or an antioxidant) are performed by painting treatment, transferring treatment, kneading or the like onto a surface of the substrate.

As the ultraviolet absorbent, a known ultraviolet absorbent may be appropriately used, examples of the absorbent including benzotriazole based ultraviolet absorbents, triazine based ultraviolet absorbents, and benzophenone based ultraviolet absorbents. These ultraviolet absorbents may be used alone or may be used in the form of a mixture of two or more thereof.

The added amount of the ultraviolet absorbent is preferably 5 parts or less by weight, more preferably 3 parts or less by weight, even more preferably from 0.1 to 1 part by weight with respect to 100 parts by weight of the base polymer of each of the resin layers.

As the light stabilizer, a known light stabilizer may be appropriately used, examples of the light stabilizer including hindered amine light stabilizers, and benzoate based light stabilizers. These light stabilizers may be used alone or may be used in the form of a mixture of two or more thereof.

The added amount of the light stabilizer is preferably 5 parts or less by weight, more preferably 3 parts or less by weight, even more preferably from 0.1 to 1 part by weight with respect to 100 parts by weight of the base polymer of each of the resin layers.

As the antioxidant, a known antioxidant may be appropriately used, examples of the antioxidant including hindered phenol antioxidants, phosphorus-containing process-heat stabilizers, lactone process-heat stabilizers, and sulfur-containing heat-resistant stabilizers. These antioxidants may be used alone or may be used in the form of a mixture of two or more thereof.

The added amount of the antioxidant is preferably 3 parts or less by weight, more preferably 1 parts or less by weight, even more preferably from 0.01 to 5 part by weight with respect to 100 parts by weight of the base polymer of each of the resin layers.

It is also allowable to incorporate any additive such as a flame retardant, inactive inorganic particles, organic particles, a lubricant or an antistatic agent into the support (or each of the resin layers) as long as the advantageous effects of the invention are not damaged.

When the sheet is used particularly in a surface protective film, the support is preferably a resin film having not only heat resistance and solvent resistance but also flexibility. When the supporting film (the support) has flexibility, the pressure sensitive adhesive composition can be painted thereon with a roll coater or the like, and the resultant can be rolled up.

If necessary, the support (the resin layer) may be subjected to releasing and antifouling treatment with a silicone based, fluorine based, long-chain alkyl based or aliphatic acid amide based releasing agent or silica powder, acid treatment, alkali treatment, primer treatment, or antistatic treatment of a painting type, a kneading-in type, an evaporating type or some other type.

If necessary, a surface coat layer, for example, a hard coat layer or a soft coat layer may be appropriately formed on the support (the resin layer). Such an example may be a surface coat layer of, thermosetting or chemical reaction curable type, such as a silicone based, melamine based, urethane based, silane based, and acrylate based layer. This makes it possible to give a surface protective film better in scratch resistance, chemical resistance, weather resistance, anti-fogging property and others.

In the pressure sensitive adhesive sheet of the invention, the scratch area ratio in an impact resistance test is preferably 0.20% or less, more preferably 0.16% or less, even more preferably 0.12% or less. The pressure sensitive adhesive sheet having the value is a sheet particularly suitable for protecting glass which is stored in the outdoors or the like for a long term or undergoes a distribution process.

In the impact resistance test (the evaluation of the impact resistance) in the invention, each sample wherein a produced pressure sensitive adhesive sheet is caused to adhere to a piece of glass having a test piece size is used to make a test by use of a pebble-throwing testing machine (JA-400, manufactured by Suga Test Instruments Co., Ltd.) under test conditions described later, and the scratch area ratio (%) per given area of each of the adherends after the test is calculated into a numerical value according to the following formula:

$$\text{Scratch area ratio (\%)} = [(\text{the total area of the scratch portions})/(\text{the area of the whole})] \times 100.$$

Additionally, the protective film of the invention for automobile glass is characterized in that one or more species of any of the above-mentioned pressure sensitive adhesive sheet are used. According to the protective film of the invention for automobile glass, the film has a function excellent in weather resistance, adhesion reliability, transparency and impact resistance since the pressure sensitive adhesive sheet producing effects and advantageous as described above is used. For this reason, the film is particularly suitable as a surface protective film for protecting automobile glass which is stored in the outdoors or the like for a long term and undergoes a distribution process.

In the invention, the protective film for automobile glass means a film for protecting a glass surface of an automobile or the like indoors or outdoors, and is a film to be used to protect a glass surface of, for example, a small-sized automobile, an ordinary automobile, a large-sized automobile, a special vehicle, a heavy machine, or a motorcycle.

The invention has the above-mentioned structure, thereby being a pressure sensitive adhesive sheet for protecting a glass surface that is excellent in weather resistance, adhesion reliability, transparency and impact resistance. Furthermore, the pressure sensitive adhesive sheet is used, thereby giving a surface protective film which is particularly suitable for protecting the glass of automobiles which are stored in the outdoors or the like for a long term and undergo a distribution process, and is excellent in weather resistance, adhesion reliability, transparency and impact resistance.

Examples

The following will describe Examples for demonstrating the structure and the advantageous effects of the invention specifically, and others. However, the invention is not limited thereto. About evaluation items in the Examples and the others, measurements described below were made.

<Measurement of Molecular Weight>

The weight-average molecular weight was measured by use of a GPC device (HLC-8120GPC, manufactured by Tosoh Corporation). Conditions for the measurement were as follows:

Eluent: THF
Flow rate: 0.5 mL/min
Measuring temperature: 40°C
Columns: TSKgel GMH-H(S) (two columns)
Detector: Differential refractometer (RI)
The weight-average molecular weight was obtained in terms of polystyrene.

<Measurement of Glass Transition Temperature (Tg)>

The glass transition temperature (Tg) (°C) was calculated according to the following formula, using literature values described below as the glass transition temperature Tgn of a homopolymer made from each of monomers:

$$\text{Formula: } 1/(Tg + 273) = \Sigma[Wn/(Tgn + 273)]$$

wherein Tg(°C) represents the glass transition temperature of a copolymer, Wn(-) represents the weight fraction of each of the monomers, Tgn (°C) represents the glass transition temperature of the homopolymer made from each of the monomers, and n represents the kind of each of the monomers.
Literature values:
2-Ethylhexyl acrylate: -70°C
Hydroxyethyl acrylate: -15°C
Ethyl acrylate: -22°C
Methyl methacrylate: 105°C

<Measurement of Initial Adhesive Strength>

Each of produced pressure sensitive adhesive sheets (150 mm x 20 mm in length along the machine direction) was caused to adhere onto a slide glass (MICRO SLIDE GLASS, manufactured by Matsunami Glass Ind. Ltd.), and then a roller 2 kg in weight was reciprocated thereon one time. In this way, the sheet was compressed thereon, and the resultant was allowed to stand still at 23˚C and 50 %RH for 30 minutes to yield a sample (a) for evaluation.

Next, about the sample (a) for evaluation, the pressure sensitive adhesive sheet was peeled at a tensile rate (crosshead speed) of 300 mm/minute and a peeling angle of 180˚ in a universal tensile testing machine (AUTOGRAPH, manufactured by Shimadzu Corporation). The adhesive strength (N/20-mm) at this time was measured. The measurement was made at 23˚C and 50 %RH.

<Measurement of High-Speed Peel Adhesive Strength>

Each of the produced pressure sensitive adhesive sheets (150 mm x 20 mm) was caused to adhere onto a slide glass (MICRO SLIDE GLASS, manufactured by Matsunami Glass Ind. Ltd.), and then a roller 2 kg in weight was reciprocated thereon one time. In this way, the sheet was compressed thereon, and the resultant was allowed to stand still at 23˚C and 50 %RH for 30 minutes to yield a sample (b) for evaluation.

Next, the sample (b) for evaluation was peeled at a tensile rate of 30 m/minute and a peeling angle of 180˚ in a high-speed peeling tester (manufactured by Tester Sangyo Co., Ltd.). The adhesive strength (N/20-mm) at this time was measured. The measurement was made at 23˚C and 50 %RH.

<Weather Resistance Evaluation>

Each of the produced pressure sensitive adhesive sheets (150 mm x 50 mm) was caused to adhere onto a slide glass (MICRO SLIDE GLASS, manufactured by Matsunami Glass Ind. Ltd.), and then a roller 2 kg in weight was reciprocated thereon one time. In this way, the sheet was compressed thereon, and the resultant was allowed to stand still at 23˚C and 50 %RH for 30 minutes to yield a sample (c) for evaluation.

The sample (c) for evaluation was processed by use of a xenon weather (Ci4000 Xenon Weather Ometer, manufactured by Atlas) in accordance with ISO 4892-2 for 500 hours. More specifically, the following step was performed: a processing step of repeating 120-minute one cycle composed of segment 1 (light radiation for 102 minutes, and spraying-off), and segment 2 (light radiation for 18 minutes, and spraying-on). In segments 1 and 2, the following conditions were used: radiation irradiance: 0.50 W/m$^2$ (at 340 nm), black panel temperature: 65˚C, test tank temperature: 40˚C, relative humidity: 50%, and lux play: off. Thereafter, the temperature was returned to room temperature (about 23˚C) to yield a sample (c') for evaluation.

Next, the sample (c') for evaluation was peeled at a tensile rate (crosshead speed) of 300 mm/minute and a peeling angle of 180˚ in the universal tensile testing machine (AUTOGRAPH, manufactured by Shimadzu Corporation). At this time, the adhesive strength (N/20-mm) after the accelerated weather resistance test was measured. The measurement was made at 23˚C and 50 %RH.

<Constant Load Test>

Each of the produced pressure sensitive adhesive sheets (150 mm x 50 mm) was caused to adhere onto a slide glass (MICRO SLIDE GLASS, manufactured by Matsunami Glass Ind. Ltd.), and then a roller 2 kg in weight was reciprocated thereon one time. In this way, the sheet was compressed thereon, and the resultant was allowed to stand still at 23˚C and 50 %RH for 48 hours to yield a sample (d) for evaluation.

Next, the sample (d) for evaluation was put into a thermostat, the temperature of which was adjusted to 80˚C, and then subjected to ageing for 30 minutes. Thereafter, a load of 1 g was applied to an end thereof. After 15 minutes, the state of a region where the pressure sensitive adhesive sheet was peeled from the glass surface was observed. The criterion for evaluation thereof was as follows:

An adhesive residue was not generated: O
An adhesive residue was generated: X

<Evaluation of Transparency>

The overall light ray transmittance (%) (a spectrophotometer, MPS-2000, manufactured by Shimadzu Corporation) to visible rays of each of the produced a pressure sensitive dhesive sheets was measured and estimated in accordance with JIS K 7361-1. In the use of the invention, the overall light ray transmittance is preferably 50 or more, more preferably 70 or more.

A haze value (%) (HAZEMETER HM 150, manufactured by Murakami Color Research Laboratory Co., Ltd.) of each of the produced pressure sensitive adhesive sheets was measured and estimated in accordance with JIS K 7136. In the use of the invention, the haze value is preferably 10 or less, more preferably 5 or less.

<Evaluation of Impact Resistance>

Prepared was a sample wherein each of the produced samples was caused to adhere to a glass (a strengthened glass, manufactured by Fujiwara Kogyo Co., Ltd.; thickness: 5 mm) having a test piece size about the evaluation of the impact resistance. The sample was tested by use of the pebble-throwing testing machine (JA-400, manufactured by Suga Test Instruments Co., Ltd.) under test conditions described below. The scratch area ratio (%) per given area of each of the adherends after the test was calculated into a numerical value according to the following formula, and then the sample was evaluated:

$$\text{Scratch area ratio (\%)} = [(\text{the total area of scratch portions})/(\text{the area of the whole})] \times 100$$

Conditions for the test were as follows:

Air pressure: 0.50 MPa (5 kgf/cm$^2$)
Blowing distance: 350 mm
Thrown pebble amount: about 200 g/ 10-sec.
Pebble size: 3 to 5 mm in diameter
Test piece size: 90 mm in width x 145 mm in height
Test environment: 23˚C and 50 %RH

<Preparation of (Meth)acrylic Polymers>

[Acrylic Polymer (A)]

Into a reactor equipped with a stirring blade, a thermometer, a nitrogen gas introducing pipe, and a condenser were charged 100 parts by weight of 2-ethylhexyl acrylate, 4 parts by weight of hydroxyethyl acrylate, 0.2 part by weight of 2,2'-azobisisobutyronitrile (manufactured by Kishida Chemical Co., Ltd.) as a polymerization initiator, and ethyl acetate. While the solution was gently stirred, nitrogen gas was introduced thereinto so as to purge the system with nitrogen. Thereafter, the temperature of the solution in the flask was kept at about 60˚C to carry out polymerization reaction for 10 hours, thereby preparing an acrylic polymer (A) solution (solid content: 50% by weight). This acrylic polymer (A) had a weight-average molecular weight of 5.4 x 10$^5$ and a Tg of -68˚C.

[Acrylic Polymer (B)]

Into a reactor equipped with a stirring blade, a thermometer, a nitrogen gas introducing pipe, and a condenser were charged 50 parts by weight of 2-ethylhexyl acrylate, 50 parts by weight of ethyl acrylate, 5 parts by weight of methyl methacrylate, 4 parts by weight of hydroxyethyl acrylate, 0.2 part by weight of dibenzoyl peroxide (NIPER BW, manufactured by NFO Corporation) as a polymerization initiator, and toluene. While the solution was gently stirred, nitrogen gas was introduced thereinto so as to purge the system with nitrogen. Thereafter, the temperature of the solution in the flask was kept at about 60˚C to carry out polymerization reaction for 10 hours, thereby preparing an acrylic polymer (B) solution (solid content: 50% by weight). This acrylic polymer (B) had a weight-average molecular weight of 4.7 x 10$^5$ and a Tg of -43˚C.

[Example 1 ]

(Preparation of Pressure Sensitive Adhesive Solution)

To 100 parts by weight of the solid matter in the acrylic polymer (A) solution were added 2 parts by weight of an aromatic polyisocyanate (CORONATE L, manufactured by Nippon Polyurethane Industry Co., Ltd.) as a crosslinking agent, 0.035 part by weight of dioctyltin dilaurate (EMBILIZER OL-1, manufactured by Tokyo Fine Chemical Co., Ltd.)

as an additive, 0.2 part by weight of a light stabilizer, TINUVIN XT850 (manufactured by Ciba Specialty Chemicals Ltd.), and 0.5 part by weight of an ultraviolet absorbent, TINUVIN X234 (manufactured by Ciba Specialty Chemicals Ltd.), and then the components were evenly mixed and stirred to prepare an acrylic pressure sensitive adhesive solution (1).

(Production of Pressure Sensitive Adhesive Sheet)

The acrylic pressure sensitive adhesive solution (1) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/80 $\mu$m/10 $\mu$m; total thickness: 100 $\mu$m). The resultant was then heated at 80°C for 3 minutes to form a pressure sensitive adhesive layer, the post-drying thickness of which was 20 $\mu$m.
Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Example 2]

(Preparation of Pressure Sensitive Adhesive Solution)

To 100 parts by weight of the solid matter in the acrylic polymer (A) solution were added 3 parts by weight of an aromatic polyisocyanate (CORONATE L, manufactured by Nippon Polyurethane Industry Co., Ltd.) as a crosslinking agent, 0.035 part by weight of dioctyltin dilaurate (EMBILIZER OL-1, manufactured by Tokyo Fine Chemical Co., Ltd.) as an additive, and 0.2 part by weight of a light stabilizer, TINUVIN XT850 (manufactured by Ciba Specialty Chemicals Ltd.), and then the components were evenly mixed and stirred to prepare an acrylic pressure sensitive adhesive solution (2).

(Production of Pressure Sensitive Adhesive Sheet)

The acrylic pressure sensitive adhesive solution (2) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/55 $\mu$m/10 $\mu$m; total thickness: 75 $\mu$m). The resultant was then heated at 80°C for 3 minutes to form a pressure sensitive adhesive layer, the post-drying thickness of which was 15 $\mu$m.
Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Example 3]

(Preparation of Pressure Sensitive Adhesive Solution)

To 100 parts by weight of the solid matter in the acrylic polymer (A) solution were added 3 parts by weight of an aromatic polyisocyanate (CORONATE L, manufactured by Nippon Polyurethane Industry Co., Ltd.) as a crosslinking agent, 0.05 part by weight of dioctyltin dilaurate (EMBILIZER OL-1, manufactured by Tokyo Fine Chemical Co., Ltd.) as an additive, and 0.25 part by weight of an ultraviolet absorbent, TINUVIN X234 (manufactured by Ciba Specialty Chemicals Ltd.), and then the components were evenly mixed and stirred to prepare an acrylic pressure sensitive adhesive solution (3).

(Production of Pressure Sensitive Adhesive Sheet)

The acrylic pressure sensitive adhesive solution (3) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/80 $\mu$m/10 $\mu$m; total thickness: 100 $\mu$m). The resultant was then heated at 80°C for 3 minutes to form a pressure sensitive adhesive layer, the post-drying thickness of which was 20 $\mu$m.

Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Example 4]

(Preparation of Pressure Sensitive Adhesive Solution)

To 100 parts by weight of the solid matter in the acrylic polymer (A) solution were added 4 parts by weight of an aromatic polyisocyanate (CORONATE L, manufactured by Nippon Polyurethane Industry Co., Ltd.) as a crosslinking agent, 0.035 part by weight of dioctyltin dilaurate (EMBILIZER OL-1, manufactured by Tokyo Fine Chemical Co., Ltd.) as an additive, and 0.1 part by weight of a light stabilizer, TINUVIN XT850 (manufactured by Ciba Specialty Chemicals Ltd.), and then the components were evenly mixed and stirred to prepare an acrylic pressure sensitive adhesive solution (4).

(Production of Pressure Sensitive Adhesive Sheet)

The acrylic pressure sensitive adhesive solution (4) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/30 $\mu$m/10 $\mu$m; total thickness: 50 $\mu$m). The resultant was then heated at 80°C for 3 minutes to form a pressure sensitive adhesive layer, the post-drying thickness of which was 20 $\mu$m.

Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Example 5]

(Preparation of Pressure Sensitive Adhesive Solution)

To 100 parts by weight of the solid matter in the acrylic polymer (B) solution were added 2 parts by weight of an aromatic polyisocyanate (CORONATE L, manufactured by Nippon Polyurethane Industry Co., Ltd.) as a crosslinking agent, 0.005 part by weight of dioctyltin dilaurate (EMBILIZER OL-1, manufactured by Tokyo Fine Chemical Co., Ltd.) as an additive, 0.2 part by weight of a light stabilizer, TINUVIN XT850 (manufactured by Ciba Specialty Chemicals Ltd.), and 0.5 part by weight of an ultraviolet absorbent, TINUVIN X234 (manufactured by Ciba Specialty Chemicals Ltd.), and then the components were evenly mixed and stirred to prepare an acrylic pressure sensitive adhesive solution (5).

(Production of Pressure Sensitive Adhesive Sheet)

The acrylic pressure sensitive adhesive solution (5) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/30 $\mu$m/10 $\mu$m; total thickness: 50 $\mu$m). The resultant was then heated at 80°C for 3 minutes to form a pressure sensitive adhesive layer, the post-drying thickness of which was 15 $\mu$m.

Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Example 6]

(Preparation of Pressure Sensitive Adhesive Solution)

To 100 parts by weight of the solid matter in the acrylic polymer (B) solution were added 3 parts by weight of an aromatic polyisocyanate (CORONATE L, manufactured by Nippon Polyurethane Industry Co., Ltd.) as a crosslinking agent, 0.020 part by weight of dioctyltin dilaurate (EMBILIZER OL-1, manufactured by Tokyo Fine Chemical Co., Ltd.) as an additive, 0.2 part by weight of a light stabilizer, TINUVIN XT850 (manufactured by Ciba Specialty Chemicals Ltd.), and 0.25 part by weight of an ultraviolet absorbent, TINUVIN X234 (manufactured by Ciba Specialty Chemicals Ltd.), and then the components were evenly mixed and stirred to prepare an acrylic pressure sensitive adhesive solution (6).

(Production of Pressure Sensitive Adhesive Sheet)

The acrylic pressure sensitive adhesive solution (6) was painted onto a corona-treated surface of a polyethylene/ polypropylene/polyethylene three-layer film (polyethylene layers: LDPE (low density polyethylene), NOVACHUCK LF580 (manufactured by Japan Polyethylene Corporation); polypropylene layer: 80 parts by weight of an EXCELLEN EPX (KS37F3, manufactured by Sumitomo Chemical Co., Ltd.), 20 parts by weight of TAFTHREN(T3712, manufactured by Sumitomo Chemical Co., Ltd.), 0.2 part by weight of a weather resistant agent (TINUVIN 622LD, manufactured by Ciba Specialty Chemicals Ltd.), 0.2 part by weight of a CHIMASSORB 2020FDL (manufactured by Ciba Specialty Chemicals Ltd.), and 0.2 part by weight of an IRGANOX HP2225 (manufactured by Ciba Specialty Chemicals Ltd.); thickness: polyethylene/polypropylene/polyethylene layers = 10 $\mu$m/30$\mu$ m/10 $\mu$m; total thickness: 50 $\mu$m). The resultant was then heated at 80°C for 3 minutes to form a pressure sensitive adhesive layer, the post-drying thickness of which was 20 $\mu$m.

Next, an LDPE (low density polyethylene) film (manufactured by Okura Industrial Co., Ltd.; 100 $\mu$m) was caused to adhere, as a separator, onto the above-mentioned pressure sensitive adhesive layer, so as to produce a pressure sensitive adhesive sheet.

[Comparative Example 1]

(Preparation of Pressure Sensitive Adhesive Solution)

As a pressure sensitive adhesive sheet of Comparative Example 1, there was used a G$_L$ASSGUARD TESA 50550 (manufactured by Beiersdorf Aktienge sellschaft; thickness: 60 $\mu$m; pressure sensitive adhesive: polyethylene/ vinyl acetate copolymer (vinyl acetate content: 40 to 80% by weight; 14 $\mu$m)); support: polypropylene resin; 46 $\mu$m).

In accordance with the above-mentioned methods, the following were performed: measurement of the adhesive strength of the produced pressure sensitive adhesive sheet (the initial adhesive strength, and the high-speed peel adhesive strength); evaluation of the weather resistance (the adhesive strength after the weather resistance test, and constant load test); evaluation of the transparency; and evaluation of the impact resistance. The resultant results are shown in Table 1.

Table 1

| | | Example 1 | Example 2 | Example 3 | Example 4 | Example 5 | Example 6 | Comparative Example 1 |
|---|---|---|---|---|---|---|---|---|
| Adhesive strength | Initial adhesive strength (N/20-mm) | 0.33 | 0.20 | 0.23 | 0.20 | 1.67 | 1.22 | 1.60 |
| Peeling property | High-speed adhesive strength (N/20-mm) | 3.20 | 2.08 | 2.70 | 1.78 | 4.60 | 2.10 | 8.20 |
| Weather resistance | Adhesive strength (N/20-mm) after the weather resistance test | 1.56 | 1.08 | 1.30 | 1.10 | 3.50 | 3.22 | 8.41 |
| | Constant load test | ○ | ○ | ○ | ○ | ○ | ○ | × |
| Transparency | Haze value (%) | 4.4 | 3.9 | 4.6 | 3.3 | 3.6 | 4.5 | 2.3 |
| | Overall light ray transmittance(%) | 91.8 | 91.9 | 91.4 | 92.0 | 92.0 | 91.9 | 92.4 |
| Impact resistance | Scratch area ratio | 0.082 | 0.120 | 0.106 | 0.158 | 0.171 | 0.116 | 0.220 |

It can be understood from the results in Table 1 that in the case of using the pressure sensitive adhesive sheets produced according to the invention (Examples 1 to 6), excellent were the transparency, the adhesive strength and the re-peeling property (the adhesion reliability) to the glass in any one of the Examples. Furthermore, in any one of the Examples, a large change in the adhesive strength after the weather resistance test and an adhesive residue were not generated and further the impact resistance was also excellent.

On the other hand, in the case of using the polyethylene/vinyl acetate copolymer (Comparative Example 1), the impact resistance was not sufficient, and the durability (the constant load test) after the processing under the practical conditions for the outdoors was not sufficient, either. Accordingly, it is made evident that about the pressure sensitive adhesive sheet of the Comparative Example, the weather resistance and the impact resistance are not yet sufficient for protecting outdoor glass such as automobile glass for which weather resistance and impact resistance are particularly required.

As described above, it is understood that the pressure sensitive adhesive sheet of the invention is a sheet for protecting a glass surface which is excellent in weather resistance, adhesion reliability, transparency and impact resistance.

## Claims

1. A pressure sensitive adhesive sheet for glass protection, comprising: a pressure sensitive adhesive layer containing a pressure sensitive adhesive composition containing, as a base polymer, a (meth)acrylic polymer containing, as monomer units, 40 to 99.9% by weight of 2-ethylhexyl (meth)acrylate (A), 0.1 to 10% by weight of a functional-group-containing (meth)acrylic monomer (B), and 0 to 59.9% by weight of a vinyl monomer (C) copolymerizable with the component (A) and/or the component (B); and a support having a three-layer structure of a polyethylene layer/ a polypropylene layer/a polyethylene layer.

2. The pressure sensitive adhesive sheet for glass protection according to claim 1, further comprising 0.1 to 5.0 parts by weight of a weather resistance stabilizer for 100 parts by weight of the (meth)acrylic polymer.

3. The pressure sensitive adhesive sheet for glass protection according to claim 1 or 2, wherein the functional-group-containing (meth)acrylic monomer (B) is a hydroxyl-group-containing (meth)acrylate.

4. The pressure sensitive adhesive sheet for glass protection according to claim 1, wherein the polypropylene layer of the support comprises 50 to 90% by weight of a homopolymer of polypropylene, or a random copolymer of polypropylene.

5. The pressure sensitive adhesive sheet for glass protection according to claim 1, wherein the polypropylene layer of the support has a thickness of 30 to 100 $\mu$m.

6. The pressure sensitive adhesive sheet for glass protection according to claim 1, wherein a scratch area ratio in an impact resistance test is 0.20% or less.

7. A protective film for automobile glass, wherein one or more species of the pressure sensitive adhesive sheets for glass protection according to any one of claims 1 to 6 are used.

## INTERNATIONAL SEARCH REPORT

| International application No. |
| --- |
| PCT/JP2006/315919 |

**A. CLASSIFICATION OF SUBJECT MATTER**
*C09J7/02*(2006.01)i, *B32B27/00*(2006.01)i, *B32B27/30*(2006.01)i, *B32B27/32* (2006.01)i, *B60J11/00*(2006.01)i, *C09J133/06*(2006.01)i

According to International Patent Classification (IPC) or to both national classification and IPC

**B. FIELDS SEARCHED**

Minimum documentation searched (classification system followed by classification symbols)
C09J7/02, B32B27/00, B32B27/30, B32B27/32, B60J11/00, C09J133/06

Documentation searched other than minimum documentation to the extent that such documents are included in the fields searched
Jitsuyo Shinan Koho          1922-1996     Jitsuyo Shinan Toroku Koho     1996-2006
Kokai Jitsuyo Shinan Koho    1971-2006     Toroku Jitsuyo Shinan Koho     1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2004-27018 A  (Nippon Carbide Industries Co., Ltd.), 29 January, 2004 (29.01.04), Claims 1, 18; Par. No. [0062]; examples 1 to 4 (Family: none) | 1-7 |
| Y | JP 7-26228 A  (Kabushiki Kaisha Teraoka Seisakusho), 27 January, 1995 (27.01.95), Claim 1; Par. Nos. [0014], [0016]; example 2 (Family: none) | 1-7 |
| Y | JP 7-1681 A  (Mitsui Toatsu Chemicals, Inc.), 06 January, 1995 (06.01.95), Claims 1 to 2 (Family: none) | 1-7 |

☒  Further documents are listed in the continuation of Box C.          ☐     See patent family annex.

| | |
| --- | --- |
| *      Special categories of cited documents:<br>"A"    document defining the general state of the art which is not considered   to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>    06 November, 2006 (06.11.06) | Date of mailing of the international search report<br>    14 November, 2006 (14.11.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/315919

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-121662 A (Sekisui Chemical Co., Ltd.), 08 May, 2001 (08.05.01), Claim 1 (Family: none) | 1-7 |
| Y | JP 2000-96009 A (Teijin Ltd.), 04 April, 2000 (04.04.00), Par. No. [0001] (Family: none) | 7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001150608 A

- JP 2004106820 A

**Non-patent literature cited in the description**

- Polymer Handbook. John Wiley & Sons, Inc, 1999, 198-253